# EUROPEAN PATENT SPECIFICATION

(11) **EP 4 113 930 B1**
(45) Date of publication and mention of the grant of the patent: **17.12.2025**
(21) Application number: 21183247.2
(22) Date of filing: 01.07.2021
(51) Int. Cl.: H04M 3/42, H04L 65/1016, H04L 65/1033, H04L 65/1069

(54) **METHOD AND COMMUNICATION SYSTEM FOR TRANSMITTING SIGNALING INFORMATION USED FOR ESTABLISHING A COMMUNICATION SESSION BETWEEN A CALLING END DEVICE AND A CALLED END DEVICE**
VERFAHREN UND KOMMUNIKATIONSSYSTEM ZUR ÜBERTRAGUNG VON SIGNALISIERUNGSINFORMATIONEN ZUM AUFBAU EINER KOMMUNIKATIONSSITZUNG ZWISCHEN EINER ANRUFENDEN ENDVORRICHTUNG UND EINER ANGERUFENEN ENDVORRICHTUNG
PROCÉDÉ ET SYSTÈME DE COMMUNICATION POUR LA TRANSMISSION D'INFORMATIONS DE SIGNALISATION UTILISÉS POUR ÉTABLIR UNE SESSION DE COMMUNICATION ENTRE UN DISPOSITIF TERMINAL D'APPEL ET UN DISPOSITIF TERMINAL APPELÉ

(43) Date of publication of application: 04.01.2023
(73) Proprietor: Deutsche Telekom AG, 53113 Bonn (DE)
(72) Inventor: SIVCHENKO, Dmitry, 64331 Weiterstadt (DE)
(74) Representative: Blumbach · Zinngrebe Patentanwälte PartG mbB

(56) References cited:
- CN-B- 104 767 709
- US-A1- 2007 140 283
- US-A1- 2012 226 997
- "3rd Generation Partnership Project; Technical Specification Group Services and System Aspects; IP Multimedia Subsystem (IMS); Stage 2 (Release 17)", vol. SA WG2, no. V17.0.0, 30 March 2021 (2021-03-30), pages 1 - 353, XP052000137, Retrieved from the Internet <URL:https://ftp.3gpp.org/Specs/archive/23_series/23.228/23228-h00.zip 23228-h00.docx> [retrieved on 20210330]
- NOKIA: "Support of IMS Transit Scenarios", 3GPP DRAFT; S2-060152(TRANSITIMS_NOKIA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Budapest; 20060110, 10 January 2006 (2006-01-10), XP050254522
- MICROSOFT TEAMS ET AL: "Microsoft Teams and Related Productivity Services in Microsoft 365 for IT Architects", HTTPS://DOCS.MICROSOFT.COM, 19 April 2019 (2019-04-19), XP055703478, Retrieved from the Internet <URL:https://web.archive.org/web/20190423051619/https://docs.microsoft.com/en-us/MicrosoftTeams/teams-architecture-solutions-posters> [retrieved on 20200610]

## Description

### Technical Field of the Invention

The present invention is directed to a method and a communication system in particular for transmitting signaling information used for establishing a communication session between a calling end device and a called end device, wherein the communication system comprises an IP Multimedia Subsystem (IMS).

### Background of the Invention

There is an increasing need for service providers or enterprises to offer unified communications (UC) solutions. In particular, in business environments enterprise communication services such as audio, web and video conferencing are integrated in an application environment supporting real time communications (RTC) between customers. For example, WebEx of Cisco or Microsoft Teams are examples of a unified communications platform generally implemented preferably in a cloud-based data center.

A system and method for managing conversations for a meeting session in a network environment on the basis of Webex is disclosed for example in US 2012/0226997 A1.

By using such a UC solution or platform it is possible for customers to communicate with each other within a company by using appropriate UC clients which can be installed onto customers end devices. Communication using a UC solution is not only possible within the company but also with users of other companies if they use the same UC solution.

To use real-time communication (RTC) within a UC solution users have to install and use a respective UC client on their devices, e.g. computer, smart phones etc. By using its identity (e.g. e-mail address etc.) and credentials the user can be registered at the data center providing the respective UC solution. After registration the user is available for a real time communication using the UC solution and can thereafter use all benefits of the UC solution like presence sharing, file transfer, audio and video conferencing, messaging, voice calls etc.

However, real time communications between customers using different UC solution or being connected to legacy telephone network like PSTN (public switched telecommunication networks) is not possible without further extensions.

In order to may integrate a UC solution such as Cisco WebEx into a communication system which comprises for example at least one legacy telephone network such as PSTN (public switched telephone network) or a mobile communication network a specific technology called SIP-Trunk has been developed. An explanation of SIP-Trunk can be found under the URL https://www.telekom.de/Hilfe/downloads/1TR0118.pdf. However, SIP-Trunk requires a specific SIP-Trunk gateway connecting a data center which provides a connection to the Proxy Call Session Control Function (P-CSCF) instance of a an IP Multimedia Subsystem (IMS), a dedicated SIP-Trunk application server connected to the Service-Call Session Control Function (S-CSCF) instance within the IP Multimedia Subsystem, wherein the application server is used to enable the service logic for calling numbers like call forwarding and call barring. In particular, each user that wishes to use SIP-Trunk has to be registered within IMS network and at the SIP-Trunk application server of the IMS system. With SIP-Trunk at least a specific SIP-Trunk application server has to be implemented in the IMS system. In addition, user registrations for SIP-Trunks create an additional load on the IMS system

The following is a list of the relevant prio-art:
"3rd Generation Partnership Project; Technical Specification Group Services and System Aspects; IP Multimedia Subsystem (IMS); Stage 2 (Release 17)", 3GPP TS 23.228, V17.0.0, 30 March 2021, pages 1-353
Nokia: "Support of IMS Transit Scenarios", 3GPP TSG-SA WG2 Meeting #50, S2-060152, Change Request, 23.228 CR 0555, v. 7.2.0, 10 January 2006
US 2007/140283 A1
CN 104 767 709 B
US 2012/226997 A1
"Microsoft Teams and Related Productivity Services in Microsoft 365 for IT Architects", 19 April 2019

### Summary of the Invention

Therefore, it is an object of the present invention to provide a method and a communication system which may improve in particular the efficiency of an IP Multimedia Subsystem (IMS) network which is involved in processing, e.g. forwarding signaling information used to establish a communication session, e.g. a voice call, between a calling party and a called party, wherein at least one of the parties is configured to communicate via a unified communications (UC) platform.

The present invention is defined by the subject-matter of the independent claims. Further details are defined in the dependent claims.

A core aspect of the present invention may be seen in allowing the establishment of a communication session between a calling party or end device and a called party or end device using an IMS network, wherein the parties have not to be registered onto the IP Multimedia Subsystem.

A further core aspect of the present invention may be seen in providing an efficient measure to process, e.g. forward, under control of an IMS network, signaling information incoming at and outgoing from the IMS network.

Using the present method and communication system there is no need any more for a SIP-Trunk infrastructure and in particular for a SIP-Trunk application server in an IMS network at all.

As a result, the number of signaling information used to establish a communication session between a called end device and a calling end device can be reduced with the aid of the present invention.

The technical problem mentioned above is solved by the steps of method claim 1 and method claim 5, respectively and by the features of claim 14. Preferred embodiments are set forth in the dependent claims.

### Brief Description of the Drawings

The invention is described below by way of example in connection with the accompanying drawings, wherein:
- Figure 1: shows an exemplary communication system, in which the invention is implemented,
- Figure 2: shows a message flow diagram in particular for establishing a communication session outgoing from the UC1 platform, and
- Figure 3: shows a message flow diagram in particular for establishing a communication session, which is received at the UC1 platform as an incoming communication session.

### Detailed Description of exemplary Embodiments of the Invention

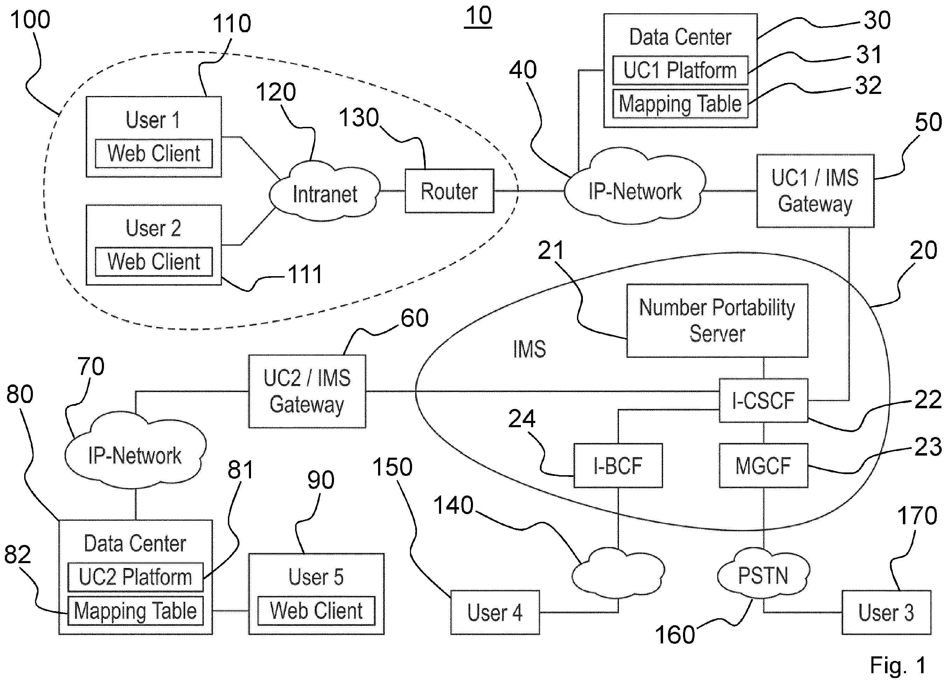

Referring now to figure 1, an exemplary communication system 10 is depicted which is a configured in particular for transmitting signaling information used for establishing a communication session between a calling end device and a called end device.

For example, the communication system 10 may comprise a customer premises equipment 100, for example a building or room in which at least one end device 110 can be located. In the preferred embodiment, two end devices 110 and 111 are deployed which can be connected via an intranet 120 to a router 130. The intranet 120 may be an IP based network or an Ethernet-based network. The end devices 110 and 110 can be any devices configured to communicate like smart phones, computers, soft phones implemented on computers or the like. In the preferred embodiment, a web client is implemented on each end device 110 and 111, which may be, for example a WebEx client allowing the users to establish real-time communication sessions via a unified communications platform, e.g. a WebEx application environment. The end devices 110 and 111 are associated with a user 1 and a user 2, respectively. The router 130 may be a known customer router 130 having a communication interface to connect the router 130 to a communication network 40. The communication network 40 may be an IP-based network like the Internet. In addition, the exemplary communication system 10 comprises for example a cloud-based data center 30 belonging to a service provider or a company which provides and operates a unified communications platform 31, also called UC1 platform. The UC1 platform is preferably implemented as an application software, e.g. a web-based multimedia communication application. In the preferred embodiment, the UC1 platform 31 is a WebEx application comprising a WebEx server software. In the exemplary embodiment, the end devices 110 and 111 are each configured to communicate via router 130 and the IP-network 40 with the WebEx server software of the UC1 platform 31 implemented at the data center 30.

Furthermore, a mapping table may be stored on the data center 30 including calling numbers and user IDs of users registered at the UC platform 31. For example, the at least the calling numbers and user IDs associated with the end device 110 and the end device 111, respectively are stored in the mapping table 31. In the mapping table each calling number is mapped onto the user ID both associated with a respective end device. The mapping table is used in a known manner to indicate to the UC1 platform which end devices, in the present case the end devices 110 and 111 shall be served. For example, a calling number +49 6151 99999 has been associated with the end device 110.

The exemplary communication system 10 further comprises a next generation network implemented as an IP multimedia sub system (IMS) 40, which may be operated by a telecommunications company. An IMS network is described for example in the textbook of Gerd Sigmund, Technik der Netze, Band 2, 6. Auflage VDE Verlag GmbH. It is to be noted, that IP multimedia subsystem 20 supports as a signaling protocol the session initiation protocol (SIP). In this connection, it should be noted, that the UC1 platform 31 implemented in the data center 30 and the end deices 110 and 111 may support a signaling protocol which may be the session initiation protocol or any other signaling protocol.

The IP multimedia subsystem 20 includes a core network. Only the components are illustrated in figure 1, which may help to support the establishment of a communication session according to the present invention. Therefore, an interrogating call session control function (I-CSCF) instance is implemented at the IP multimedia subsystem 20, which is directly connected to a number portability server 21 and at least one gateway device implemented at the edge of the core network of the IMS network 20. In the preferred embodiment, two gateway devices 23 and 24 are directly coupled to the I-CSCF instance 22. Preferably, the gateway device 24 is configured to perform an interconnection border control function (I-BCF), whereas the gateway device 23 is configured to perform a media gateway control function (MGCF). It should be mentioned, that the gateway devices 23 and 24 operates in a known manner, which is described for example in the textbook of Gerd Sigmund as mentioned above.

Preferably, the IMS network 20 is connected via the gateway device 23 to a public switched telecommunication network (PSTN) 160. At least one end device 170 associated with a user 3 is connectable via the PSTN 160 to the IMS network 20. It is to be noted, that the PSTN network 160 uses a signal protocol, which is preferably based on the Signaling System 7 (SS7).

Furthermore, gateway device 24 may be connected to another telecommunications network 140, which may support a signaling protocol, for example the session initiation protocol. As depicted in figure 1 at least one end device 115, associated with a user 4 can be connected via the telecommunications network 140 to the IMS network 20.

In order to couple or connect the UC1 platform 31 implemented in the data center 30 to the IMS network 20 a gateway device 50, hereinafter also called UC1/IMS gateway device 50 is used which is located between the IMS network 20 and the data center 30. It is important to note, that the UC1/IMS gateway device 50 is directly connected to the I-CSCF instance 22. That means that the gateway device 50 and the I-CSCF instance 22 communicate with each other without other components of the IMS network 20. The gateway device 50 is configured to store calling numbers of end devices, which can be registered at the UC1 platform 31 and which shall be served by the gateway device 50. For example, at least the calling number of end device 110 can be stored on the gateway device 50.

In the preferred embodiment, a further gateway device 60, hereinafter also called UC2/IMS gateway device, is configured to connect a further data center 80 via an IP-network 70 to the I-CSCF instance 22 of the IMS network 20. It should be noted, that the networks 40, 70 and 140 may be implemented as a single network like the Internet. The data center 80 belongs to another company providing a further unified communications platform UC2 including a web-based multimedia communication application, for example Microsoft Teams, which in turn comprises a Teams server software module. Similar to data center 30, a mapping table 82 is implemented at the data center 80 storing calling numbers and user identities associated with end devices configured to communicate with the UC2 platform 81.In the present case only an end device 90 is depicted which is configured to communicate via a Teams web client with UC2 platform of the data center 80. In the mapping 82 table each calling number is mapped onto the user ID both associated with a respective end device. The mapping table is used in a known manner to indicate to the UC2 platform, which end devices, in the present case the end devices 90 shall be served. It to be noted, that the data center 80 and the UC2 platform 81, respectively may support a signaling protocol, which may be the session initiation protocol.

The number portability server 21 of the IMS network 20 is configured to store preferably a plurality of calling numbers associated with respective end devices which are configured to be operated as a called end device. In the preferred embodiment, the calling numbers of the end devices 90, 110, 111, 150 and 170 are stored.

It should be noted, that in particular the number portability server 21 and the measure of providing a direct communication between the I-CSCF instance 22 with each of the gateways 60, 50, 23 and 24 avoids the transmission of signaling information in order to register the users 1-5 and their end devices, respectively at the IMS network 20 as is necessary when deploying an IMS network in its usual manner or in connection with the SIP-Trunk technology.

It should be noted the gateway device 50 and 60, respectively, may be operated as conventional session border controller.

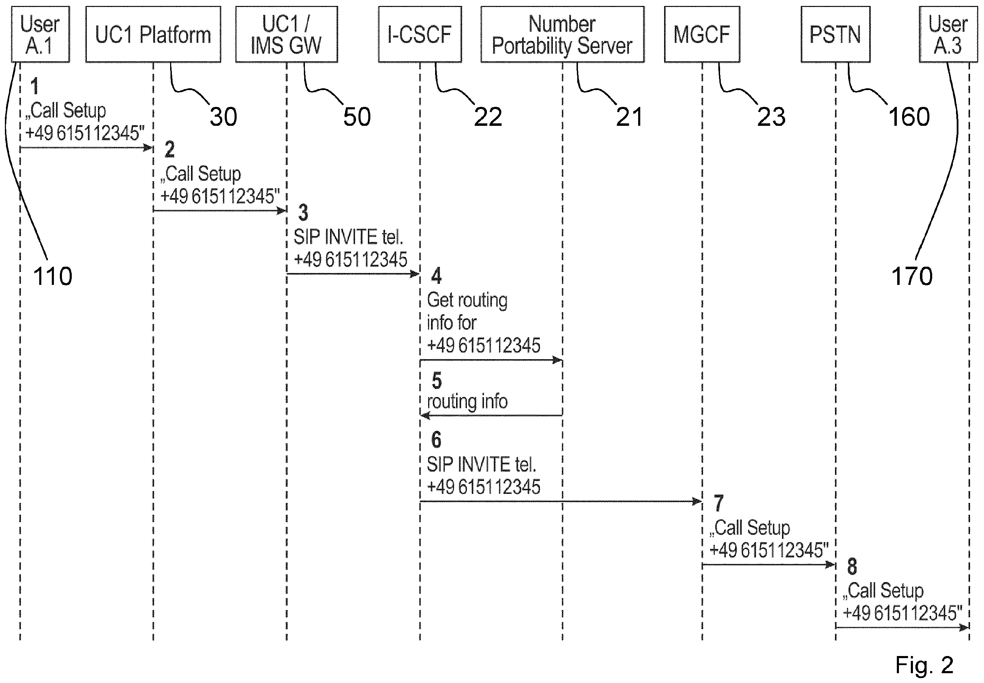

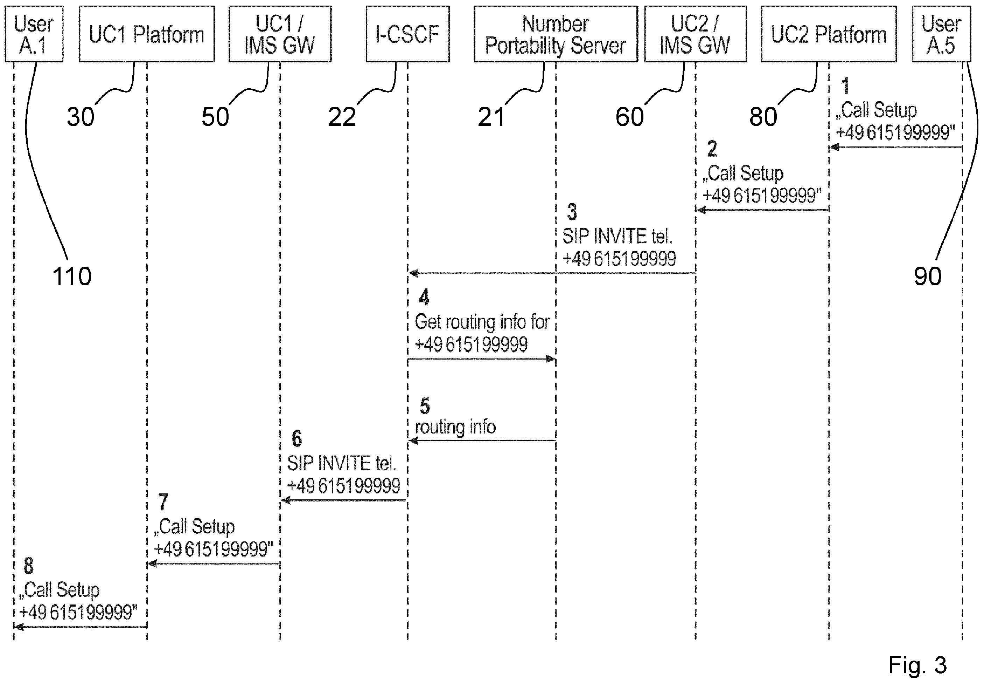

Now the operation of the exemplary communication system 10 is described in detail with reference to the message flow diagram of figure 2 and the message flow diagram of figure 3. In particular, the message flow from a calling party to a called party, which may be used for establishing a communication session there between is illustrated.

A first exemplary scenario describes an exemplary method for transmitting signaling information used to establish a communication session, in particular a voice call between the end device 110 and the end device 170 each forming an endpoint of the voice call to be established. In this exemplary scenario, end device 110 operates as a calling party or calling end device, whereas end device 170 operates as a called party or called end device. It is assumed, that the calling number of end device 170 is "+ 49 6151 12345". It should be noted that the term session initiation message or session request message may be used as a synonym for the term signaling information. In order to may start the establishment of a communication session the user 1 associated with the end device 110 starts the WebEx client on its end device 110.

At step 1 a first session initiation message is generated and transmitted by the calling end device 110 to the UC1 platform 31 running in the data center 30. The first session initiation message is defined by the signaling protocol supported by the UC1 platform and end device 110. In the preferred embodiment, the first session initiation message may be called as a call setup message including the calling number "+ 49 6151 12345" of the called end device 170 and preferably the user ID and/or the calling number of the end device 110.

At step 2, the first session initiation message or a new session initiation message including the calling number of end device 170 and preferably the user ID and/or the calling number of the end device 110 is forwarded from the data center 30 and the UC1 platform 31, respectively, to the first gateway device 50 for example via the network 40. The first session initiation message is then received at the gateway device 50.

It should be noted, that gateway device 50 may be configured to convert the signaling information received from the UC1 platform 31 into a signaling information according to the session initiation protocol used by the IMS network 20. Therefore, the gateway device 50 may be adapted to convert the received first session initiation message into a second initiation message which is a SIP invite message including at least the calling number "+ 49 6151 12345" of the end device 170.

At step 3 the SIP invite message is transmitted by the gateway device 50 directly to the I-CSCF instance 22 of the IMS network 20. The term directly indicates that no further components of the IMS network 20, in particular no P-CSCF instance is involved in the transmission step 3.

As mentioned above, the calling number of the end device 110 may be stored in the gateway device 50. In this case, prior to performing step 3) the following steps may be performed:
verifying, by the first gateway device 50, the first session initiation message to determine, whether an identification, e.g. the calling number of the calling end device 110 is included in the first session initiation message, which corresponds to an identification, e.g. the calling number of the end device 110 is stored in the first gateway device 50, and
performing step 3 only, if a correspondence is determined. In the preferred embodiment, a correspondence is determined and thus step 3 is executed.

The I-CSCF instance 22 is configured to directly contact the number portability server 22 in order to retrieve in dependence of the calling number of the called end device 170 included in the second session initiation message an information from the number portability server 21, wherein the retrieved information identifies a gateway device configured to transmit a session initiation message destined for the called end device 170. Since the communication system 10 is configured such that the end device 170 is connected to the PSTN network 160 the information associated with the calling number +49 6151 12345 of called end device 170 and stored in the number portability server 21 may include a routing information. The routing information may include an address of the gateway device 23 of the IMS network 20 or preferably an information that the called end device 170 can be achieved via the PSTN network 160. With other words: The retrieved information and the routing information, respectively, identifies a gateway device configured to transmit a session initiation message destined for the called end device. In the present case, the gateway device is the gateway device 23 and the called end device is the end device 170.

As a result, the number portability server 21 transmits in response to a getting message received at step 4 from I-CSCF instance 22 the respective information directly to the I-CSCF instance 22 at step 5.

At step 6 the I-CSCF instance 22 transmits in response to the information received from the number portability server 21 a third session initiation message including the calling number of the called end device 170 directly to the gateway device 23 identified by the information received at step 5. It should be noted, that the third initiation message may be the second initiation message as received in step 3.

According to the first exemplary scenario the identified gateway device 23 is connected to the PSTN network 160. Therefore, the gateway device 23 is configured to perform the MGCF function to convert the SIP invite message received at step 6 into a session initiation message including the calling number of the called end device 170. It should be noted that the session initiation message may be in conformity with the Signaling System No. 7. Therefore the gateway device 23 of the IMS network 20 is configured to send as a session initiation message call setup message including the calling number of the called end device 170 via the PSTN network 160 to the end device 170 as depicted in figure 2 at steps 7 and 8. For the sake of better understanding signaling information like acknowledge messages, ringing messages are not illustrated.

It should be noted, that signaling information used to establish a communication session for example between the calling end device 111 and the called end device 90 may be transmitted in a similar way. In this case, the I-CSCF instance 22 would use the calling number of called end device 90 to retrieve an information from the number portability server device 21 identifying the gateway device 60 since the communication session to be established has to be routed via the gateway device 60 and the UC2 platform 81 of the data center 80 to the end device 90 as the called end point of the respective communication session.

Now a second exemplary second scenario is described for transmitting signaling information used to establish a communication session, in particular a voice call between the end device 90 and the end device 110 each forming an endpoint of the voice call to be established. In this exemplary scenario, end device 110 operates as the called end device, whereas end device 90 operates as the calling end device. It is assumed, that the calling number of end device 110 is "+ 49 6151 99999". It should be noted that the term session initiation message or session request message may be used as a synonym for the term signaling information. In order to may start the establishment of a communication session the user 5 associated with the end device 90 starts the Teams client on its end device 90.

At step 1 the end device 90 and the Teams client, respectively, generates a first session initiation message, also called call setup message, which includes the calling number "+49 6151 99999" associated with the called end device 110. The first session initiation message is in compliance with a signaling protocol supported by the UC2 platform 81 and the end device 90.

At step 1 a first session initiation message is generated and transmitted by the calling end device 90 an the Teams client, respectively, to the UC2 platform 81 running in the data center 80. The first session initiation message is defined by the signaling protocol supported by the UC2 platform and end device 90. In the preferred embodiment, the first session initiation message may be called as a call setup message including the calling number "+ 49 6151 99999" of the called end device 110 and preferably the user ID and/or the calling number of the end device 90.

At step 2, the first session initiation message or a new session initiation message including the calling number of end device 110 and preferably the user ID and/or the calling number of the end device 90 is forwarded from the data center 80 and the UC2 platform 81, respectively, to the gateway device 60 for example via the network 70. The first session initiation message is then received at the gateway device 60.

It should be noted, that gateway device 60 may be configured to convert the signaling information received from the UP2 platform 81 into a signaling information according to the session initiation protocol used by the IMS network 20. Therefore, the gateway device 60 may be adapted to convert the received first session initiation message into a second initiation message which is a SIP invite message including at least the calling number "+ 49 6151 99999" of the end device 110.

At step 3 the SIP invite message is transmitted by the gateway device 60 directly to the I-CSCF instance 22 of the IMS network 20. The term directly indicates that no further components of the IMS network 20, in particular no P-CSCF instance is involved at the transmission step 3.

As mentioned above, the calling number of the end device 90 may be stored in the gateway device 60. In this case, prior to performing step 3) the following steps may be performed:
verifying, by the first gateway device 60, the first session initiation message to determine, whether an identification, e.g. the calling number of the calling end device 90 is included in the first session initiation message, which corresponds to an identification, e.g. the calling number of the end device 90 is stored in the gateway device 60, and
performing step 3 only if a correspondence is determined. In the preferred embodiment, a correspondence is determined and thus step 3 is executed.

The I-CSCF instance 22 is configured to directly contact the number portability server 22 in order to retrieve in dependence of the calling number of the called end device 110 included in the second session initiation message an information from the number portability server 21, wherein the retrieved information identifies a gateway device configured to transmit a session initiation message destined for the called end device 110. Since the communication system 10 is configured such that the end device 110 is connected to the UC1 platform 31 the information associated with the calling number +49 6151 99999" of called end device 110 and stored in the number portability server 21 includes a routing information. The routing information may include an address of the first gateway device 50 or preferably the information that the called end device 110 can be achieved via the first gateway device 50. With other words: The retrieved information and the routing information, respectively, identifies a gateway device configured to transmit a session initiation message destined for the called end device. In the present case, the gateway device is the first gateway device 50 and the called end device is the end device 110.

As a result, the number portability server 21 transmits in response to a getting message received at step 4 from I-CSCF instance 22 the respective information directly to the I-CSCF instance 22 at step 5.

At step 6 the I-CSCF instance 22 transmits in response to the information received from the number portability server 21 a third session initiation message including the calling number of the called end device 110 directly to the gateway device 50 identified by the information received at step 5. It should be noted, that the third initiation message may be the second initiation message as received in step 3.

The gateway device 50 may be configured to convert the SIP invite message received at step 6 into a session initiation message including the calling number of the called end device 110. It should be noted, that the session initiation message is in conformity with the signaling protocol supported by the UC1 platform 31 and the end device 110.

Preferably, the gateway device 50 is configured to send as a session initiation message a call setup message including the calling number of the called end device 110 via the UC1 platform 31 and the further to the end device 110 as depicted in figure 32 at steps 7 and 8. For the sake of better understanding signaling information like acknowledge messages, ringing messages are not illustrated.

According to a preferred implementation the gateway device 50 may be configured to
a) verify, prior to transmit a call setup message to the UC1 platform 31, the third signaling information received from the I-CSCF instance 22 to determine, whether the calling number of the called end device 110 included in the third session initiation message corresponds to a calling number stored in the UC1/IMS gateway device 50, and
b) to transmit a call setup message including the calling number of the called end device 110 to the UC1 platform 31 only, if a correspondence has been determined.

It should be noted, that signaling information used to establish a communication session for example between the calling end device 170 and the called end device 111 may be transmitted in a similar way. In this case, the I-CSCF instance 22 would
i) receive a signaling information including the calling number of end device 111 from the gateway 23, and
ii) retrieve an information from the number portability server device 21 identifying the gateway device 50 since the communication session to be established has to be routed via the gateway device 50 and the UC1 platform 31 to the end device 111 as the called end point of the respective communication session.

At least some of the preferred aspects illustrated above are now summarized.

According to a first preferred aspect a method for transmitting signaling information used for establishing a communication session between a calling end device and a called end device via a communication system 10 is provided, wherein the communication system 10 may comprise an IP Multimedia Subsystem (IMS) 20, a first data center 30 providing a first unified communications UC1 platform 31 and a first gateway device 50 connecting the first data center 30 directly to an interrogating call session control function (I-CSCF) instance 22 implemented at the IP Multimedia Subsystem 20, the method comprising preferably the steps of:
a) receiving, at the first gateway device 50, first signaling information from the first unified communications (UC1) platform 31, the first signaling information being associated with a calling end device 110 and including the calling number of a called end device 170, the calling end device 110 being configured to communicate with the unified communications (UC1) platform 31, the calling end device (110) and the called end device 170 each forming an endpoint of a communication session to be established;
b) transmitting, by the first gateway device 50, second signaling information including the calling number of the called end device 170 directly to the I-CSCF instance 22;
c) retrieving, by the I-CSCF instance 22, in dependence of the calling number of the called end device 170 an information from a number portability server device 21 associated with the IP Multimedia Subsystem (20), the information identifying a gateway device 23, 24, 50 and 60, respectively, configured to transmit signaling information destined for the called end device 170, the signaling information including the calling number of the called end device 170; and
d) transmitting, by the I-CSCF instance 22, in response to the information retrieved at step c) third signaling information including the calling number of the called end device 170 directly to the gateway device 23 identified at step c).

Preferably, the gateway device 23 identified at step c) may belong to a plurality of gateway devices which comprises the first gateway device 50, and/or a second gateway device 60 connecting a second data center 80 providing a second unified communications (UC2) platform 81 directly to the I-CSCF 22 of the IP Multimedia Subsystem 20 and/or at least one third gateway device 23, 24 of the IP Multimedia Subsystem 20 which is directly connected to the I-CSCF 22 of the IP Multimedia Subsystem 20, the at least one third gateway device 23, 24 being connected to a telecommunications network 160 and 140, respectively, which the called end device 150, 160 can be connected to.

Preferably, the at least one third gateway device 23, 24 implemented in the IP Multimedia Subsystem 20 may be configured to perform an Interconnection Border Control Function I-BCF or a Media Gateway Control Function (MGCF.

Preferably, the first gateway device 50 and/or the second gateway device 60 may be configured to operate as a common Session Border Controller (SBC).

Preferably, the first data center 30 and/or the second data center 80 can be implemented as a cloud-based data center comprising a plurality of interconnected server devices.

Preferably, a plurality of calling numbers and information associated with each calling number of the plurality of calling numbers may be stored in the number portability server device 21, each calling number being associated with a different end device 110, 111, 90, 150, 170 and each information identifying the first or second or the third gateway device 23, 24, 50, 60 configured to transmit signaling information destined for the called end device 111, 90, 150, 170 the respective calling number belongs to.

Preferably, prior to performing step b) the following steps may be performed:
verifying, by the first gateway device 50, the first signaling information to determine, whether an identification of the calling end device 110 is included in the first signaling information which corresponds to an identification stored in the first gateway device 50, and
performing step b) only, if a correspondence is determined.

According to a further preferred aspect, a method for transmitting signaling information used for establishing a communication session between a calling end device and a called end device via a communication system is provided, wherein the communication system 10 may comprise an IP Multimedia Subsystem (IMS) 20, a first data center 30 providing a first unified communications (UC1) platform 31 and a first gateway 50 connecting the first data center 30 to an interrogating call session control function (I-CSCF) instance 22 implemented on the IP Multimedia Subsystem 20, wherein the method may comprise the steps of:
a) receiving, at a second gateway device 23, 24, 60, first signaling information, the first signaling information associated with a calling end device 170 and including the calling number of a called end device 110, wherein the second gateway device 23, 24, 60 connects the IP-Multimedia Subsystem 20 to a telecommunications network 140, 160, 80 the calling end device 170 is connectable to, the calling end device 170 and the called end device 110 each forming an endpoint of a communication session to be established, and wherein the called end device 110 is configured to communicate with the first unified communications (UC1) platform 31;
b) transmitting, by the second gateway device 23, 24, 60, second signaling information including the calling number of the called end device 110 directly to the I-CSCF instance 22;
c) retrieving, by the I-CSCF instance 22, in dependence of the calling number of the called end device 110 an information from a number portability server device 21, the information identifying the first gateway 50 configured to transmit signaling information destined for the called end device 110, the signaling information including the calling number of the called end device 110; and
d) transmitting, by the I-CSCF instance 22, in response to the information retrieved at step c) third signaling information including the calling number of the called end device 110 directly to the first gateway device 50 identified at step c).

Preferably, the second gateway device may be a gateway device 60 connecting, as the telecommunications network, a second data center 80 providing a second unified communications (UC2) platform 81 directly to the I-CSCF instance 22 of the **IP** Multimedia Subsystem 20, or a gateway device 23, 24 of the IP Multimedia Subsystem 20 which may be configured to perform an Interconnection Border Control Function (I-BCF) or a Media Gateway Control Function (MGCF).

Preferably, a plurality of calling numbers and an information identifying the first gateway device 50 may be stored in the number portability server device 21, each calling number of the plurality of calling numbers being associated with a different end device 110, 111, and with the information identifying the first gateway device 50.

Preferably, the method may further comprise the steps of
- verifying, by the first gateway device 50, the third signaling information to determine, whether the calling number of the called end device 110 included in the third signaling information corresponds to a calling number stored in the first gateway device 50, and
- transmitting a fourth signaling information including the calling number of the called end device 110 to the unified communications platform 31 only, if a correspondence is determined.

Preferably, the first and/or second unified communications platform 31, 81 may comprise a web-based multimedia communication application, e.g. WebEx, Teams or the like.

Preferably, the communication session to be established between the called end device and the calling end device may be a voice call.

Preferably, the IP Multimedia Subsystem 20 supports the Session Initiation Protocol (SIP).

Preferably, the signaling information transmitted in steps b) and d) are signaling messages according to the Session Initiation Protocol (SIP), in particular Invite messages.

According to a further preferred aspect a communication system 10 is provided in particular for transmitting signaling information used for establishing a communication session between a calling end device and a called end device, wherein the communication system 10 may comprise:
- a first gateway device 50,
- an IP Multimedia Subsystem (IMS) 20 including an interrogating call session control function (I-CSCF) instance 22 and at least one second gateway device 23, 24 configured to perform an Interconnection Border Control Function (I-BCF) or a Media Gateway Control Function (MGCF),
- a number portability server device 21 configured to store a plurality of calling numbers and information associated with each calling number of the first plurality of calling numbers, each calling number being associated with a different end device 110, 111, 90, 150, 170 operatable as a called end device and each information identifying the first or second gateway device 50, 23, 24 which is configured to transmit signaling information destined for an end device associated with the respective calling number of the plurality of calling numbers, wherein

the I-CSCF instance 22 is configured to directly communicate with the first gateway device 50, the at least one second gateway device 23, 24 and the number portability server device 21,
   - a data center 30 providing a unified communications (UC1) platform (31),
   - at least a first end device 110, 111 configured to communicate with the unified communications platform (31), wherein
the first gateway device 50 is configured to connect the data center 30 with the I-CSCF instance 22 and wherein
the first gateway device 50 is further configured
   a) to receive first signaling information from the unified communications platform 31, the first signaling information being associated with the first end device 110 operating as a calling end device and including the calling number of a second end device 170 operating as a called end device, and
   b) to transmit second signaling information including the calling number of the second end device 170 directly to the I-CSCF instance 22, the first end device 110 and the second end device 170 each forming an endpoint of a communication session to be established, wherein
the I-CSCF instance 22 is configured
   a) to retrieve in dependence of the calling number of the second end device 170 an information from the number portability server device 21, the information identifying the first or second gateway device 50, 23, 24 configured to transmit signaling information destined for the second end device (170), the signaling information including the calling number of the second end device 170, and
   b) to transmit in response to the information retrieved third signaling information including the calling number of the second end device 170 directly to the first or second gateway device 50, 23, 24 identified by the information.

Preferably, the first gateway device 50 may be further configured to
- verify the first signaling information to determine, whether an identification of the first end device 110 is included in the first signaling information which corresponds to an identification stored in the first gateway device 50, and
to transmit the second signaling information only, if a correspondence is determined.

Preferably, the at least one second gateway device 23, 24 may be further configured
a) to receive a session initiation message via an external communication network 80, 140 or 160, which is not the data center 30, this session initiation message being generated by an end device operating as a calling end device, e.g. end device 90, 150 or 170, and including the calling number of an end device operating as a called end device, e.g. end device 110 or 111, the called end device 110 and 111, respectively, being configured to communicate with the unified communications platform 31, and
b) to transmit a session initiation message including the calling number of the call end device 110 or 111 directly to the I-CSCF instance 22, the calling end device and the called end device each forming an endpoint of a communication session to be established, wherein
the I-CSCF instance 22 is configured
a) to retrieve in dependence of the calling number of the called end device 110 or 111 an information from the number portability server device 21, the information identifying the first gateway device 50 configured to transmit a session initiation message destined for the called end device 110 or 111; and
b) to transmit in response to the information retrieved a session initiation message including the calling number of the called end device 110 or 111 directly to the first gateway device 50 identified by the information.

## Claims

1. A method for transmitting signaling information used for establishing a communication session between a calling end device and a called end device via a communication system (10), the communication system (10) comprising an IP Multimedia Subsystem IMS (20), a first data center (30) providing a first unified communications UC platform (31) and a first gateway device (50) connecting the first data center (30) directly to an interrogating call session control function I-CSCF instance (22) implemented at the **IP** Multimedia Subsystem (20), wherein said first unified communication platform (31) provides an application environment, in which enterprise communication services such as audio, web and video conferencing are integrated, and which supports real time communications RTC, the method comprising the steps of:
a1) receiving, at the first gateway device (50), first signaling information from the first unified communications UC platform (31), the first signaling information being associated with a calling end device (110) and including the calling number of a called end device (170), the calling end device (110) being configured to communicate with the unified communications UC platform (31), the calling end device (110) and the called end device (170) each forming an endpoint of a communication session to be established, and converting, at the first gateway device (50), the first signaling information into a second signaling information according to the session initiation protocol, wherein the second signaling information includes the calling number of the called end device (170);
b1) transmitting, by the first gateway device (50), the second signaling information directly to the I-CSCF instance (22), wherein no further component of the IP Multimedia Subsystem (20) is involved in the transmission;
c1) retrieving, by the I-CSCF instance (22), in dependence of the calling number of the called end device (170) an information from a number portability server device (21) associated with the IP Multimedia Subsystem (20), the information identifying a gateway device (23, 24, 60) configured to transmit signaling information destined for the called end device (170), the signaling information including the calling number of the called end device (170); and
d1) transmitting, by the I-CSCF instance (22), in response to the information retrieved at step c1) third signaling information including the calling number of the called end device (170) directly to the gateway device (23) identified at step c1),
or the steps of:
a2) receiving, at a second gateway device (23, 24, 60), first signaling information, the first signaling information associated with a calling end device (170) and including the calling number of a called end device (110), wherein the second gateway device (23, 24, 60) connects the IP-Multimedia Subsystem (20) to a telecommunications network (140, 160, 80) the calling end device (170) is connectable to, the calling end device (170 and the called end device (110) each forming an endpoint of a communication session to be established, and wherein the called end device (110) is configured to communicate with the first unified communications UC platform (31);
b2) transmitting, by the second gateway device (23, 24, 60), second signaling information including the calling number of the called end device (110) directly to the I-CSCF instance (22), wherein no further component of the IP Multimedia Subsystem (20) is involved in the transmission;
c2) retrieving, by the I-CSCF instance (22), in dependence of the calling number of the called end device (110) an information from a number portability server device (21), the information identifying the first gateway (50) configured to transmit signaling information destined for the called end device (110), the signaling information including the calling number of the called end device (110); and
d2) transmitting, by the I-CSCF instance (22), in response to the information retrieved at step c2) third signaling information including the calling number of the called end device (110) directly to the first gateway device (50) identified at step c2), and converting the third signaling information into a session initiation message including the calling number of the called end device (110), wherein the session initiation message is in conformity with the signaling protocol supported by the first unified communications UC platform (31) and the called end device (110).

2. The method of claim 1,
wherein the gateway device (23) identified at step c1) belongs to a plurality of gateway devices which comprises the first gateway device (50), and/or a second gateway device (60) connecting a second data center (80) providing a second unified communications UC platform (81) directly to the I-CSCF (22) of the IP Multimedia Subsystem (20) and/or at least one third gateway device (23, 24) of the IP Multimedia Subsystem (20) which is directly connected to the I-CSCF (22) of the IP Multimedia Subsystem (20), the at least one third gateway device (23, 24) being connected to a telecommunications network (140, 160) which the called end device (150, 160) can be connected to.

3. The method of claim 2,
wherein the at least one third gateway device (23, 24) implemented in the IP Multimedia Subsystem (20) is configured to perform an Interconnection Border Control Function I-BCF or a Media Gateway Control Function MGCF.

4. The method of claim 2 or 3,
wherein a plurality of calling numbers and information associated with each calling number of the plurality of calling numbers are stored in the number portability server device (21), each calling number being associated with a different end device (110, 111, 90, 150, 170) and each information identifying the first or second or the third gateway device (23, 24, 50, 60) configured to transmit signaling information destined for the called end device (111, 90, 150, 170 the respective calling number belongs to.

5. The method of any one of the preceding claims,
wherein prior to performing step b1) the following steps are performed:
verifying, by the first gateway device (50), the first signaling information to determine, whether an identification of the calling end device (110) is included in the first signaling information which corresponds to an identification stored in the first gateway device (50), and
performing step b1) only, if a correspondence is determined.

6. The method of claim 1,
wherein the second gateway device is a gateway device (60) connecting, as the telecommunications network, a second data center (80) providing a second unified communications UC platform (81) directly to the I-CSCF instance (22) of the IP Multimedia Subsystem (20), or a gateway device (23, 24) of the IP Multimedia Subsystem (20) which is configured to perform an Interconnection Border Control Function I-BCF or a Media Gateway Control Function MGCF.

7. The method of claim 1 or 6,
wherein a plurality of calling numbers and an information identifying the first gateway device (50) are stored in the number portability server device (21), each calling number of the plurality of calling numbers being associated with a different end device (110, 111), and with the information identifying the first gateway device (50).

8. The method of any one of the claims 1, 6 or 7,
further comprising the steps of
- verifying, by the first gateway device (50), the third signaling information to determine, whether the calling number of the called end device (110) included in the third signaling information corresponds to a calling number stored in the first gateway device (50), and
- transmitting a fourth signaling information including the calling number of the called end device (110) to the unified communications platform (31) only, if a correspondence is determined.

9. The method of any one of the preceding claims,
wherein the first and/or second unified communications platform (31, 81) comprises a web-based multimedia communication application.

10. The method of any one of the preceding claims,
wherein the communication session to be established between the called end device and the calling end device is a voice call.

11. The method of any one of the preceding claims,
wherein the IP Multimedia Subsystem (20) supports the Session Initiation Protocol SIP.

12. The method of claim 11,
wherein the signaling information transmitted in steps b) and d) are signaling messages according to the Session Initiation Protocol SIP, in particular Invite messages.

13. A communication system (20) in particular for transmitting signaling information used for establishing a communication session between a calling end device and a called end device, the communication system comprising:
- a first gateway device (50),
- an IP Multimedia Subsystem IMS (20) including an interrogating call session control function I-CSCF instance (22) and at least one second gateway device (23, 24) configured to perform an Interconnection Border Control Function I-BCF or a Media Gateway Control Function MGCF,
- a number portability server device (21) configured to store a plurality of calling numbers and information associated with each calling number of the first plurality of calling numbers, each calling number being associated with a different end device (110, 111, 90, 150, 170) operatable as a called end device and each information identifying the first or second gateway device (50, 23, 24) which is configured to transmit signaling information destined for an end device associated with the respective calling number of the plurality of calling numbers, wherein
the I-CSCF instance (22) is configured to directly communicate with the first gateway device (50), the at least one second gateway device (23, 24) and the number portability server device (21),
- a data center (30) providing a unified communications UC platform (31), wherein said unified communication platform (31) provides an application environment, in which enterprise communication services such as audio, web and video conferencing are integrated, and which supports real time communications RTC,
- at least a first end device (110, 111) configured to communicate with the unified communications platform (31), wherein
the first gateway device (50) is configured to connect the data center (30) with the I-CSCF instance (22) and wherein
the first gateway device (50) is further configured
a) to receive first signaling information from the unified communications platform (31), the first signaling information being associated with the first end device (110) operating as a calling end device and including the calling number of a second end device (170) operating as a called end device, and to convert the first signaling information into a second signaling information according to the session initiation protocol, wherein the second signaling information includes the calling number of the called end device (170), and
b) to transmit the second signaling information directly to the I-CSCF instance (22), wherein no further component of the IP Multimedia Subsystem (20) is involved in the transmission, the first end device (110) and the second end device (170) each forming an endpoint of a communication session to be established, wherein
the I-CSCF instance (22) is configured
a) to retrieve in dependence of the calling number of the second end device (170) an information from the number portability server device (21), the information identifying the first or second gateway device (50, 23, 24) configured to transmit signaling information destined for the second end device (170), the signaling information including the calling number of the second end device (170), and
b) to transmit in response to the information retrieved third signaling information including the calling number of the second end device (170) directly to the first or second gateway device (50, 23, 24) identified by the information.

14. The communication system of claim 13, method of any one of the preceding claims,
wherein the first gateway device (50) is further configured to
- verify the first signaling information to determine, whether an identification of the first end device (110) is included in the first signaling information which corresponds to an identification stored in the first gateway device (50), and to transmit the second signaling information only, if a correspondence is determined.

## Patentansprüche

1. Verfahren zum Übertragen von Signalisierungsinformationen, die zum Aufbau einer Kommunikationssitzung zwischen einem anrufenden Endgerät und einem angerufenen Endgerät über ein Kommunikationssystem (10) verwendet werden, wobei das Kommunikationssystem (10) ein IP-Multimedia-Subsystem, IMS (20), ein erstes Datenzentrum (30), das eine erste Plattform für vereinheitlichte Kommunikation, UC (31) bereitstellt, und eine erste Gateway-Vorrichtung (50), die das erste Datenzentrum (30) direkt mit einer abfragenden Anrufsitzungssteuerungsfunktion, I-CSCF-Instanz (22) verbindet, die im IP-Multimedia-Subsystem (20) implementiert ist, umfasst, wobei die erste Plattform für vereinheitlichte Kommunikation (31) eine Anwendungsumgebung bereitstellt, in der Unternehmenskommunikationsdienste wie Audio-, Web- und Videokonferenzen integriert sind und die Echtzeitkommunikation, RTC unterstützt, wobei das Verfahren die folgenden Schritte umfasst:
a1) Empfangen erster Signalisierungsinformationen von der ersten Plattform für vereinheitlichte Kommunikation, UC (31) an der ersten Gateway-Vorrichtung (50), wobei die ersten Signalisierungsinformationen einem anrufenden Endgerät (110) zugeordnet sind und die Rufnummer eines angerufenen Endgeräts (170) enthalten, wobei das anrufende Endgerät (110) so konfiguriert ist, dass es mit der Plattform für vereinheitlichte Kommunikation, UC (31) kommunizieren kann, wobei das anrufende Endgerät (110) und das angerufene Endgerät (170) jeweils einen Endpunkt einer herzustellenden Kommunikationssitzung bilden, und Umwandeln der ersten Signalisierungsinformationen an der ersten Gateway-Vorrichtung (50) in zweite Signalisierungsinformationen gemäß dem Sitzungsinitiierungsprotokoll, wobei die zweiten Signalisierungsinformationen die Rufnummer des angerufenen Endgeräts (170) enthalten;
b1) Übertragen der zweiten Signalisierungsinformationen durch die erste Gateway-Vorrichtung (50) direkt an die I-CSCF-Instanz (22), wobei keine weitere Komponente des IP-Multimedia-Subsystems (20) an der Übertragung beteiligt ist;
c1) Abrufen von Informationen von einer dem IP-Multimedia-Subsystem (20) zugeordneten Nummernportabilitäts-Servervorrichtung (21) durch die I-CSCF-Instanz (22) in Abhängigkeit der Rufnummer des angerufenen Endgeräts (170), wobei die Informationen eine Gateway-Vorrichtung (23, 24, 60) identifizieren, die dazu konfiguriert ist, Signalisierungsinformationen zu übertragen, die für das angerufene Endgerät (170) bestimmt sind, wobei die Signalisierungsinformationen die Rufnummer des angerufenen Endgeräts (170) enthalten; und
d1) Übertragen, durch die I-CSCF-Instanz (22), als Reaktion auf die in Schritt c1) abgerufenen Informationen, dritter Signalisierungsinformationen, die die Rufnummer des angerufenen Endgeräts (170) enthalten, direkt an die in Schritt c1) identifizierte Gateway-Vorrichtung (23), oder die folgenden Schritte:
a2) Empfangen erster Signalisierungsinformationen an einer zweiten Gateway-Vorrichtung (23, 24, 60), wobei die ersten Signalisierungsinformationen einem anrufenden Endgerät (170) zugeordnet sind und die Rufnummer eines angerufenen Endgeräts (110) enthalten, wobei die zweite Gateway-Vorrichtung (23, 24, 60) das IP-Multimedia-Subsystem (20) mit einem Telekommunikationsnetzwerk verbindet (140, 160, 80), mit dem das anrufende Endgerät (170) verbindbar ist, wobei das anrufende Endgerät (170) und das angerufene Endgerät (110) jeweils einen Endpunkt einer herzustellenden Kommunikationssitzung bilden und wobei das angerufene Endgerät (110) so konfiguriert ist, dass es mit der ersten Plattform für vereinheitlichte Kommunikation, UC (31) kommunizieren kann;
b2) Übertragen von zweiten Signalisierungsinformationen, die die Rufnummer des angerufenen Endgeräts (110) enthalten, durch die zweite Gateway-Vorrichtung (23, 24, 60) direkt an die I-CSCF-Instanz (22), wobei keine weitere Komponente des IP-Multimedia-Subsystems (20) an der Übertragung beteiligt ist;
c2) Abrufen von Informationen von einer Nummernportabilitäts-Servervorrichtung (21) durch die I-CSCF-Instanz (22) in Abhängigkeit von der Rufnummer des angerufenen Endgeräts (110), wobei die Informationen das erste Gateway (50) identifizieren, das zum Übertragen von Signalisierungsinformationen konfiguriert ist, die für das angerufene Endgerät (110) bestimmt sind, wobei die Signalisierungsinformationen die Rufnummer des angerufenen Endgeräts (110) enthalten; und
d2) Übertragen, durch die I-CSCF-Instanz (22), als Reaktion auf die in Schritt c2) abgerufenen Informationen, dritter Signalisierungsinformationen, die die Rufnummer des angerufenen Endgeräts (110) enthalten, direkt an die in Schritt c2) identifizierte erste Gateway-Vorrichtung (50), und Umwandeln der dritten Signalisierungsinformationen in eine Sitzungsinitiierungsnachricht, die die Rufnummer des angerufenen Endgeräts (110) enthält, wobei die Sitzungsinitiierungsnachricht mit dem Signalisierungsprotokoll übereinstimmt, das von der ersten Plattform für vereinheitlichte Kommunikation, UC (31) und dem angerufenen Endgerät (110) unterstützt wird.

2. Verfahren nach Anspruch 1,
wobei die in Schritt c1) identifizierte Gateway-Vorrichtung (23) zu einer Vielzahl von Gateway-Vorrichtungen gehört, umfassend die erste Gateway-Vorrichtung (50) und/oder eine zweite Gateway-Vorrichtung (60), die ein zweites Datenzentrum (80), das eine zweite Plattform für vereinheitlichte Kommunikation, UC (81) bereitstellt, direkt mit dem I-CSCF (22) des IP-Multimedia-Subsystems (20) verbindet, und/oder wenigstens eine dritte Gateway-Vorrichtung (23, 24) des IP-Multimedia-Subsystems (20), die direkt mit dem I-CSCF (22) des IP-Multimedia-Subsystems (20) verbunden ist, wobei die wenigstens eine dritte Gateway-Vorrichtung (23, 24) mit einem Telekommunikationsnetz (140, 160) verbunden ist, mit dem das angerufene Endgerät (150, 160) verbunden werden kann.

3. Verfahren nach Anspruch 2,
wobei die wenigstens eine dritte Gateway-Vorrichtung (23, 24), die in dem IP-Multimedia-Subsystem (20) implementiert ist, dazu konfiguriert ist, eine Netzgrenzkontrollfunktion I-BCF oder eine Mediengateway-Kontrollfunktion MGCF auszuführen.

4. Verfahren nach Anspruch 2 oder 3,
wobei eine Vielzahl von Rufnummern und Informationen, die jeder Rufnummer der Vielzahl von Rufnummern zugeordnet sind, in der Nummernportabilitäts-Servervorrichtung (21) gespeichert sind, wobei jede Rufnummer einem anderen Endgerät (110, 111, 90, 150, 170) zugeordnet ist und jede Information die erste oder zweite oder dritte Gateway-Vorrichtung (23, 24, 50, 60) identifiziert, die dazu konfiguriert ist, Signalisierungsinformationen zu übertragen, die für das angerufene Endgerät (111, 90, 150, 170) bestimmt sind, zu dem die jeweilige Rufnummer gehört.

5. Verfahren nach einem der vorstehenden Ansprüche,
wobei vor der Durchführung von Schritt b1) die folgenden Schritte durchgeführt werden:
Überprüfen der ersten Signalisierungsinformationen durch die erste Gateway-Vorrichtung (50), um festzustellen, ob eine Identifikation des anrufenden Endgeräts (110) in den ersten Signalisierungsinformationen enthalten ist, die einer in der ersten Gateway-Vorrichtung (50) gespeicherten Identifikation entspricht, und Ausführen des Schritts b1) nur dann, wenn eine Entsprechung festgestellt wird.

6. Verfahren nach Anspruch 1,
wobei die zweite Gateway-Vorrichtung eine Gateway-Vorrichtung (60) ist, die als Telekommunikationsnetzwerk ein zweites Datenzentrum (80), das eine zweite Plattform für vereinheitlichte Kommunikation, UC (81) bereitstellt, direkt mit der I-CSCF-Instanz (22) des IP-Multimedia-Subsystems (20) verbindet, oder eine Gateway-Vorrichtung (23, 24) des IP-Multimedia-Subsystems (20) ist, die dazu konfiguriert ist, eine Netzgrenzkontrollfunktion I-BCF oder eine Mediengateway-Kontrollfunktion MGCF auszuführen.

7. Verfahren nach Anspruch 1 oder 6,
wobei eine Vielzahl von Rufnummern und Informationen, die die erste Gateway-Vorrichtung (50) identifizieren, in der Nummernportabilitäts-Servervorrichtung (21) gespeichert sind, wobei jede Rufnummer der Vielzahl von Rufnummern einem anderen Endgerät (110, 111) zugeordnet ist, sowie den Informationen, die die erste Gateway-Vorrichtung (50) identifizieren.

8. Verfahren nach einem der Ansprüche 1, 6 oder 7, ferner umfassend die Schritte
- Überprüfen der dritten Signalisierungsinformationen durch die erste Gateway-Vorrichtung (50), um festzustellen, ob die in den dritten Signalisierungsinformationen enthaltene Rufnummer des angerufenen Endgeräts (110) einer in der ersten Gateway-Vorrichtung (50) gespeicherten Rufnummer entspricht, und
- Übertragen vierter Signalisierungsinformationen, die die Rufnummer des angerufenen Endgeräts (110) enthalten, an die Plattform für vereinheitlichte Kommunikation (31) nur dann, wenn eine Entsprechung festgestellt wird.

9. Verfahren nach einem der vorstehenden Ansprüche, wobei die erste und/oder zweite Plattform für vereinheitlichte Kommunikation (31, 81) eine webbasierte Multimedia-Kommunikationsanwendung umfasst.

10. Verfahren nach einem der vorstehenden Ansprüche,
wobei die zwischen dem angerufenen Endgerät und dem anrufenden Endgerät herzustellende Kommunikationssitzung ein Sprachanruf ist.

11. Verfahren nach einem der vorstehenden Ansprüche,
wobei das IP-Multimedia-Subsystem (20) das Sitzungsinitiierungsprotokoll SIP unterstützt.

12. Verfahren nach Anspruch 11,
wobei die in den Schritten b) und d) übertragenen Signalisierungsinformationen Signalisierungsnachrichten gemäß dem Sitzungsinitiierungsprotokoll SIP, insbesondere Invite-Nachrichten, sind.

13. Kommunikationssystem (20), insbesondere zum Übertragen von Signalisierungsinformationen, die zum Aufbau einer Kommunikationssitzung zwischen einem anrufenden Endgerät und einem angerufenen Endgerät verwendet werden, wobei das Kommunikationssystem umfasst:
- eine erste Gateway-Vorrichtung (50),
- ein IP-Multimedia-Subsystem IMS (20) mit einer abfragenden Anrufsitzungssteuerungsfunktion, I-CSCF-Instanz (22) und wenigstens einer zweiten Gateway-Vorrichtung (23, 24), die dazu konfiguriert ist, eine Netzgrenzkontrollfunktion I-BCF oder eine Mediengateway-Kontrollfunktion MGCF auszuführen,
- eine Nummernportabilitäts-Servervorrichtung (21), die dazu konfiguriert ist, eine Vielzahl von Rufnummern und Informationen, die jeder Rufnummer der ersten Vielzahl von Rufnummern zugeordnet sind, zu speichern, wobei jede Rufnummer einem anderen Endgerät (110, 111, 90, 150, 170), das als angerufenes Endgerät betrieben werden kann, zugeordnet ist, und wobei jede Information die erste oder zweite Gateway-Vorrichtung (50, 23, 24) identifiziert, die dazu konfiguriert ist, Signalisierungsinformationen zu übertragen, die für ein Endgerät bestimmt sind, das der jeweiligen Rufnummer der Vielzahl von Rufnummern zugeordnet ist, wobei die I-CSCF-Instanz (22) dazu konfiguriert ist, direkt mit der ersten Gateway-Vorrichtung (50), der wenigstens einen zweiten Gateway-Vorrichtung (23, 24) und der Nummernportabilitäts-Servervorrichtung (21) zu kommunizieren, - ein Datenzentrum (30), das eine Plattform für vereinheitlichte Kommunikation, UC (31), bereitstellt, wobei die Plattform für vereinheitlichte Kommunikation (31) eine Anwendungsumgebung bereitstellt, in der Unternehmenskommunikationsdienste wie Audio-, Web- und Videokonferenzen integriert sind und die Echtzeitkommunikation, RTC, unterstützt, - wenigstens ein erstes Endgerät (110, 111), das dazu konfiguriert ist, mit der Plattform für vereinheitlichte Kommunikation (31) zu kommunizieren, wobei die erste Gateway-Vorrichtung (50) dazu konfiguriert ist, das Datenzentrum (30) mit der I-CSCF-Instanz (22) zu verbinden, und wobei die erste Gateway-Vorrichtung (50) ferner dazu konfiguriert ist,
a) erste Signalisierungsinformationen von der Plattform für vereinheitlichte Kommunikation (31) zu empfangen, wobei die ersten Signalisierungsinformationen dem ersten Endgerät (110) zugeordnet sind, das als anrufendes Endgerät fungiert, und die Rufnummer eines zweiten Endgeräts (170) enthalten, das als angerufenes Endgerät fungiert, und die ersten Signalisierungsinformationen in zweite Signalisierungsinformationen gemäß dem Sitzungsinitiierungsprotokoll umzuwandeln, wobei die zweiten Signalisierungsinformationen die Rufnummer des angerufenen Endgeräts (170) enthalten, und
b) die zweiten Signalisierungsinformationen direkt an die I-CSCF-Instanz (22) zu übertragen, wobei keine weitere Komponente des IP-Multimedia-Subsystems (20) an der Übertragung beteiligt ist, wobei das erste Endgerät (110) und das zweite Endgerät (170) jeweils einen Endpunkt einer herzustellenden Kommunikationssitzung bilden, wobei die I-CSCF-Instanz (22) dazu konfiguriert ist,
a) in Abhängigkeit von der Rufnummer des zweiten Endgeräts (170) Informationen von der Nummernportabilitäts-Servervorrichtung (21) abzurufen, wobei die Informationen die erste oder zweite Gateway-Vorrichtung (50, 23, 24) identifizieren, die dazu konfiguriert ist, für das zweite Endgerät (170) bestimmte Signalisierungsinformationen zu übertragen, wobei die Signalisierungsinformationen die Rufnummer des zweiten Endgeräts (170) enthalten, und
b) als Reaktion auf die abgerufenen Informationen dritte Signalisierungsinformationen, die die Rufnummer des zweiten Endgeräts (170) enthalten, direkt an die erste oder zweite Gateway-Vorrichtung (50, 23, 24) zu übertragen, die durch die Informationen identifiziert wird.

14. Kommunikationssystem nach Anspruch 13, Verfahren nach einem der vorstehenden Ansprüche,
wobei die erste Gateway-Vorrichtung (50) ferner dazu konfiguriert ist,
- die ersten Signalisierungsinformationen zu überprüfen, um festzustellen, ob eine Identifikation des ersten Endgeräts (110) in den ersten Signalisierungsinformationen enthalten ist, die einer in der ersten Gateway-Vorrichtung (50) gespeicherten Identifikation entspricht, und die zweiten Signalisierungsinformationen nur zu übertragen, wenn cinc Entsprechung festgestellt wird.

## Revendications

1. Procédé de transmission d'informations de signalisation utilisé pour établir une session de communication entre un dispositif terminal appelant et un dispositif terminal appelé par l'intermédiaire d'un système de communication (10), le système de communication (10) comprenant un sous-système multimédia IP, IMS (20), un premier centre de données (30) fournissant une première plateforme de communications unifiées, UC (31), et un premier dispositif passerelle (50) connectant directement le premier centre de données (30) à une instance de fonction de contrôle de session d'appel interrogative, I-CSCF (22), implémentée sur le sous-système multimédia IP (20), dans lequel ladite première plateforme de communications unifiées (31) fournit un environnement applicatif dans lequel des services de communication d'entreprise tels que l'audio, le web et la visioconférence sont intégrés, et qui prend en charge des communications en temps réel, RTC, le procédé comprenant les étapes suivantes :
a1) la réception, au niveau du premier dispositif passerelle (50), de premières informations de signalisation provenant de la première plateforme de communications unifiées, UC (31), les premières informations de signalisation étant associées à un dispositif terminal appelant (110) et incluant le numéro appelant d'un dispositif terminal appelé (170), le dispositif terminal appelant (110) étant configuré pour communiquer avec la plateforme de communications unifiées, UC (31), le dispositif terminal appelant (110) et le dispositif terminal appelé (170) formant chacun un point d'extrémité d'une session de communication à établir, et convertir, au niveau du premier dispositif passerelle (50), les premières informations de signalisation en deuxièmes informations de signalisation selon le protocole d'initiation de session, dans lequel les deuxièmes informations de signalisation incluent le numéro appelant du dispositif terminal appelé (170) ;
b1) la transmission, par le premier dispositif passerelle (50), des deuxièmes informations de signalisation directement à l'instance I-CSCF (22), dans lequel aucun autre composant du sous-système multimédia IP (20) n'est impliqué dans la transmission ;
c1) la récupération, par l'instance I-CSCF (22), en fonction du numéro appelant du dispositif terminal appelé (170), d'informations provenant d'un dispositif serveur de portabilité de numéro (21) associé au sous-système multimédia IP (20), les informations identifiant un dispositif passerelle (23, 24, 60) configuré pour transmettre des informations de signalisation destinées au dispositif terminal appelé (170), les informations de signalisation incluant le numéro appelant du dispositif terminal appelé (170) ; et
d1) la transmission, par l'instance I-CSCF (22), en réponse aux informations récupérées à l'étape c1), de troisièmes informations de signalisation incluant le numéro appelant du dispositif terminal appelé (170) directement au dispositif passerelle (23) identifié à l'étape c1),
ou les étapes suivantes :
a2) la réception, au niveau d'un deuxième dispositif passerelle (23, 24, 60), de premières informations de signalisation, les premières informations de signalisation étant associées à un dispositif terminal appelant (170) et incluant le numéro appelant d'un dispositif terminal appelé (110), dans lequel le deuxième dispositif passerelle (23, 24, 60) connecte le sous-système multimédia IP (20) à un réseau de télécommunications (140, 160, 80) auquel le dispositif terminal appelant (170) peut se connecter, le dispositif terminal appelant (170) et le dispositif terminal appelé (110) formant chacun un point d'extrémité d'une session de communication à établir, et dans lequel le dispositif terminal appelé (110) est configuré pour communiquer avec la première plateforme de communications unifiées, UC (31) ;
b2) la transmission, par le deuxième dispositif passerelle (23, 24, 60), de deuxièmes informations de signalisation incluant le numéro appelant du dispositif terminal appelé (110) directement à l'instance I-CSCF (22), dans lequel aucun autre composant du sous-système multimédia IP (20) n'est impliqué dans la transmission ;
c2) la récupération, par l'instance I-CSCF (22), en fonction du numéro appelant du dispositif terminal appelé (110), d'informations provenant d'un dispositif serveur de portabilité de numéro (21), les informations identifiant la première passerelle (50) configurée pour transmettre des informations de signalisation destinées au dispositif terminal appelé (110), les informations de signalisation incluant le numéro appelant du dispositif terminal appelé (110) ; et
d2) la transmission, par l'instance I-CSCF (22), en réponse aux informations récupérées à l'étape c2), de troisièmes informations de signalisation incluant le numéro appelant du dispositif terminal appelé (110) directement au premier dispositif passerelle (50) identifié à l'étape c2), et la conversion des troisièmes informations de signalisation en un message d'initiation de session incluant le numéro appelant du dispositif terminal appelé (110), dans lequel le message d'initiation de session est conforme au protocole de signalisation pris en charge par la première plateforme de communications unifiées, UC (31), et le dispositif terminal appelé (110).

2. Procédé selon la revendication 1,
dans lequel le dispositif passerelle (23) identifié à l'étape c1) appartient à une pluralité de dispositifs passerelles qui comprend le premier dispositif passerelle (50), et/ou un deuxième dispositif passerelle (60) connectant un second centre de données (80) qui fournit une seconde plateforme de communications unifiées, UC (81), directement à l'I-CSCF (22) du sous-système multimédia IP (20) et/ou au moins un troisième dispositif passerelle (23, 24) du sous-système multimédia IP (20) qui est directement connecté à l'I-CSCF (22) du sous-système multimédia IP (20), l'au moins un troisième dispositif passerelle (23, 24) étant connecté à un réseau de télécommunications (140, 160) auquel le dispositif terminal appelé (150, 160) peut être connecté.

3. Procédé selon la revendication 2,
dans lequel l'au moins un troisième dispositif passerelle (23, 24) implémenté dans le sous-système multimédia IP (20) est configuré pour réaliser une fonction de contrôle de frontière d'interconnexion, LBCF, ou une fonction de contrôle de passerelle multimédia, MGCF.

4. Procédé selon la revendication 2 ou 3,
dans lequel une pluralité de numéros appelants et d'informations associées à chaque numéro appelant de la pluralité de numéros appelants sont stockés dans le dispositif serveur de portabilité de numéro (21), chaque numéro appelant étant associé à un dispositif terminal (110, 111, 90, 150, 170) différent et chaque information identifiant le premier, le deuxième ou le troisième dispositif passerelle (23, 24, 50, 60) configuré pour transmettre des informations de signalisation destinées au dispositif terminal appelé (111, 90, 150, 170) auquel appartient le numéro appelant respectif.

5. Procédé selon l'une quelconque des revendications précédentes,
dans lequel, avant de réaliser l'étape b1), les étapes suivantes sont réalisées : vérification, par le premier dispositif passerelle (50), des premières informations de signalisation pour déterminer si une identification du dispositif terminal appelant (110) est incluse dans les premières informations de signalisation qui correspondent à une identification stockée dans le premier dispositif passerelle (50), et
réalisation de l'étape b1) uniquement si une correspondance est déterminée.

6. Procédé selon la revendication 1,
dans lequel le deuxième dispositif passerelle est un dispositif passerelle (60) connectant, en tant que réseau de télécommunications, un second centre de données (80) qui fournit une seconde plateforme de communications unifiées, UC (81), directement à l'instance I-CSCF (22) du sous-système multimédia IP (20), ou un dispositif passerelle (23, 24) du sous-système multimédia IP (20) qui est configuré pour réaliser une fonction de contrôle de frontière d'interconnexion, LBCF, ou une fonction de contrôle de passerelle multimédia, MGCF.

7. Procédé selon la revendication 1 ou 6,
dans lequel une pluralité de numéros appelants et des informations identifiant le premier dispositif passerelle (50) sont stockés dans le dispositif serveur de portabilité de numéro (21), chaque numéro appelant de la pluralité de numéros appelants étant associé à un dispositif terminal (110, 111) différent, et aux informations identifiant le premier dispositif passerelle (50).

8. Procédé selon l'une quelconque des revendications 1, 6 ou 7,
comprenant en outre les étapes de
- vérification, par le premier dispositif passerelle (50), des troisièmes informations de signalisation pour déterminer si le numéro appelant du dispositif terminal appelé (110) inclus dans les troisièmes informations de signalisation correspond à un numéro appelant stocké dans le premier dispositif passerelle (50), et
- transmission de quatrièmes informations de signalisation incluant le numéro appelant du dispositif terminal appelé (110) à la plateforme de communications unifiées (31) uniquement, si une correspondance est déterminée.

9. Procédé selon l'une quelconque des revendications précédentes,
dans lequel la première et/ou la seconde plateforme de communications unifiées (31, 81) comprend une application de communication multimédia basée sur le Web.

10. Procédé selon l'une quelconque des revendications précédentes,
dans lequel la session de communication à établir entre le dispositif terminal appelé et le dispositif terminal appelant est un appel vocal.

11. Procédé selon l'une quelconque des revendications précédentes,
dans lequel le sous-système multimédia IP (20) prend en charge le protocole d'initiation de session, SIP.

12. Procédé selon la revendication 11,
dans lequel les informations de signalisation transmises dans les étapes b) et d) sont des messages de signalisation selon le protocole d'initiation de session, SIP, en particulier des messages d'invitation.

13. Système de communication (20), en particulier destiné à la transmission d'informations de signalisation utilisées pour établir une session de communication entre un dispositif terminal appelant et un dispositif terminal appelé, le système de communication comprenant :
- un premier dispositif passerelle (50),
- un sous-système multimédia IP, IMS, (20) incluant une instance de fonction de contrôle de session d'appel interrogative, I-CSCF, (22) et au moins un deuxième dispositif passerelle (23, 24) configuré pour réaliser une fonction de contrôle de frontière d'interconnexion, I-BCF, ou une fonction de contrôle de passerelle multimédia, MGCF,
- un dispositif serveur de portabilité de numéro (21) configuré pour stocker une pluralité de numéros appelants et d'informations associées à chaque numéro appelant de la première pluralité de numéros appelants, chaque numéro appelant étant associé à un dispositif terminal (110, 111, 90, 150, 170) différent pouvant fonctionner comme un dispositif terminal appelé et chaque information identifiant le premier ou le deuxième dispositif passerelle (50, 23, 24) qui est configuré pour transmettre des informations de signalisation destinées à un dispositif terminal associé au numéro appelant respectif de la pluralité de numéros appelants, dans lequel
l'instance I-CSCF (22) est configurée pour communiquer directement avec le premier dispositif passerelle (50), l'au moins un deuxième dispositif passerelle (23, 24) et le dispositif serveur de portabilité de numéro (21),
- un centre de données (30) fournissant une plateforme de communications unifiées, UC (31), dans lequel ladite plateforme de communications unifiées (31) fournit un environnement applicatif, dans lequel des services de communication d'entreprise tels que l'audio, le Web et la vidéoconférence sont intégrés, et qui prend en charge les communications en temps réel, RTC,
- au moins un premier dispositif terminal (110, 111) configuré pour communiquer avec la plateforme de communications unifiées (31), dans lequel
le premier dispositif passerelle (50) est configuré pour connecter le centre de données (30) à l'instance I-CSCF (22) et dans lequel
le premier dispositif passerelle (50) est en outre configuré
a) pour recevoir des premières informations de signalisation de la plateforme de communications unifiées (31), les premières informations de signalisation étant associées au premier dispositif terminal (110) fonctionnant comme un dispositif terminal appelant et incluant le numéro appelant d'un second dispositif terminal (170) fonctionnant comme un dispositif terminal appelé, et pour convertir les premières informations de signalisation en deuxièmes informations de signalisation selon le protocole d'initiation de session, dans lequel les deuxièmes informations de signalisation incluent le numéro appelant du dispositif terminal appelé (170), et
b) pour transmettre les deuxièmes informations de signalisation directement à l'instance I-CSCF (22), dans lequel aucun autre composant du sous-système multimédia IP (20) n'est impliqué dans la transmission, le premier dispositif terminal (110) et le second dispositif terminal (170) formant chacun un point d'extrémité d'une session de communication à établir, dans lequel
l'instance I-CSCF (22) est configurée
a) pour récupérer, en fonction du numéro appelant du second dispositif terminal (170), des informations provenant du dispositif serveur de portabilité de numéro (21), les informations identifiant le premier ou le deuxième dispositif passerelle (50, 23, 24) configuré pour transmettre des informations de signalisation destinées au second dispositif terminal (170), les informations de signalisation incluant le numéro appelant du second dispositif terminal (170), et
b) pour transmettre, en réponse aux informations récupérées, des troisièmes informations de signalisation incluant le numéro appelant du second dispositif terminal (170) directement au premier ou au deuxième dispositif passerelle (50, 23, 24) identifié par les informations.

14. Système de communication selon la revendication 13, procédé selon l'une quelconque des revendications précédentes,
dans lesquels le premier dispositif passerelle (50) est en outre configuré pour
- vérifier les premières informations de signalisation pour déterminer si une identification du premier dispositif terminal (110) est incluse dans les premières informations de signalisation qui correspondent à une identification stockée dans le premier dispositif passerelle (50), et pour transmettre les deuxièmes informations de signalisation uniquement, si une correspondance est déterminée.
